# EUROPÄISCHE PATENTSCHRIFT

(11) **EP 0 679 868 B1**
(45) Veröffentlichungstag und Bekanntmachung des Hinweises auf die Patenterteilung: **30.09.1998**
(21) Anmeldenummer: 95103982.5
(22) Anmeldetag: 17.03.1995
(51) Int. Cl.: G01D 3/02, G01D 3/08, G01P 3/488

(54) **Stellungsgeber mit Datenauswerteschaltung**
Position sensor with data processing circuit
Capteur de position avec circuit d'évaluation

(30) Priorität: 16.04.1994 DE 4413281
(43) Veröffentlichungstag der Anmeldung: 02.11.1995
(73) Patentinhaber: Mehnert, Walter, Dr., D-85521 Ottobrunn (DE); Theil, Thomas, D-82340 Feldafing. (DE)
(72) Erfinder: Mehnert, Walter, Dr., D-85521 Ottobrunn (DE); Theil, Thomas, D-82340 Feldafing. (DE)
(74) Vertreter: Strasser, Wolfgang, Dipl.-Phys

(56) Entgegenhaltungen:
- EP-A- 0 581 151
- WO-A-88/04780
- DE-A- 3 034 442
- US-A- 3 826 985

## Beschreibung

Die Erfindung betrifft einen Stellungsgeber mit Datenauswerteschaltung der im Oberbegriff des Anspruches 1 genannten Art.

Solche Stellungsgeber werden häufig als "intelligente" Meßstellen eingesetzt, d.h. sie umfassen in unmittelbarer räumlicher Nähe zu einem oder mehreren Sensoren, die elektrische Signale erzeugen, welche die zu überwachende Position bzw. Bewegung beschreiben, eine periphere Auswerte- und Speicherelektronik mit eigener Stromversorgung, die dazu dient, die von dem oder den Sensoren erzeugten Signale einer ersten Teilverarbeitung zu unterwerfen und die so gewonnene Information so lange zwischenzuspeichern, bis sie von einem "Anwender", beispielsweise einer zentralen Meß- und Auswerteeinheit abgerufen wird.

Ein konkretes Beispiel hierfür bildet eine sogenannte Multiturn-Schaltung, bei der wenigstens ein Sensor immer dann ein elektrisches Signal erzeugt, wenn eine drehbare Welle eine vorgewählte Winkelstellung durchläuft. Aus diesen Sensorsignalen leitet die periphere Elektronik einen Zählimpuls ab, der gegebenenfalls unter Berücksichtigung der Drehrichtung der Welle den Zählwert eines in der peripheren Elektronik vorhandenen Zählers ändert. Dieser Zählwert stellt dann die oben erwähnte zwischengespeicherte Information dar, die über eine Schnittstelle von einem Verwender abgefragt werden kann.

Fällt die Stromversorgung einer solchen peripheren Elektronikschaltung aus, so geht die in ihr gespeicherte Information verloren, wenn nicht besondere Maßnahmen ergriffen werden.

Diese Maßnahmen können z.B. darin bestehen, daß die periphere Einheit ihre Informationen noch rasch an die Zentraleinheit sendet, bevor ihre Versorgungsspannung so weit abgesunken ist, daß es zu einem Datenverlust kommt. Voraussetzung hierfür ist, daß das System ein selbständiges Senden der peripheren Einheit ermöglicht und die zentrale Einheit zu dem betreffenden kritischen Zeitpunkt kurzfristig empfangsbereit ist. Diese Voraussetzungen sind bei vielen Systemen nicht erfüllt.

Eine weitere Möglichkeit besteht darin, zur Stromversorgung der peripheren Elektronik eine eigene Batterieanordnung vorzusehen, und diese Batterien immer rechtzeitig gegen neue auszutauschen, bevor es zu einer kritischen Spannungsabsenkung kommt. Dies bedingt einen hohen Überwachungs- und Wartungsaufwand, der unerwünscht und in vielen Fällen undurchführbar ist.

Somit liegt der Erfindung die Aufgabe zugrunde, einen Stellungsgeber der eingangs genannten Art so weiterzubilden, daß er prinzipiell von jeder äußeren Stromversorgung unabhängig ist bzw. auch dann, wenn diese äußere Stromversorgung für sehr lange Zeiträume ausfällt, einwandfrei weiterarbeitet und dabei ohne Batterien auskommt.

Zur Lösung dieser Aufgabe sieht die Erfindung die im Anspruch 1 zusammengefaßten Merkmale vor.

Den ersten Schritt der erfindungsgemäßen Maßnahmen bildet die Verwendung eines Energieumformers, der in der Lage ist, aus der kinetischen Energie der Bewegung, die durch den Stellungsgeber überwacht werden soll, einen Teil abzuzweigen und beim Erreichen einer vorgebbaren Position jeweils in einen elektrischen Strom-Spannungs-Stoß umzuformen, der auch dann genügend elektrische Energie enthält, um zumindest eine kurzzeitige Stromversorgung der gesamten peripheren Elektronik sicherzustellen, wenn besagte Bewegung nur sehr Langsam erfolgt. Somit sind in jedem Fall die Erfassung und Teilverarbeitung eines die zu überwachende Position beschreibenden Signales sowie eine kurzfristige Informationszwischenspeicherung sichergestellt. Ein solcher Energieumformer ist in der älteren EP-A-0 658 745 beschrieben.

Dabei kann der vom Energieumformer erzeugte Strom-Spannungs-Stoß bzw. ein Teil hiervon selbst das die Position beschreibende Signal sein, oder es kann dieses Signal durch einen vom Energieumformer getrennten Sensor erzeugt werden.

Wird dann diese vom Energieumformer gelieferte elektrische Energie in einem in der peripheren Schaltungsanordnung enthaltenen Energiespeicher in geeigneter Weise gespeichert, so kann sie durchaus ausreichend sein, um den Betrieb einer auf niederen Stromverbrauch ausgelegten Schaltungsanordnung einige Sekunden aufrechtzuerhalten.

Würde die zu überwachende Bewegung ständig mit einer solchen Geschwindigkeit erfolgen, daß der Energieumformer den nächsten Strom-Spannungs-Stoß erzeugt und den Energiespeicher wieder voll auflädt, bevor die von letzterem abgegebene Versorgungsspannung zu weit abgefallen ist, wären bereits diese Maßnahmen ausreichend, um die der Erfindung zugrundeliegende Aufgabe vollständig zu lösen.

Da aber hiermit im Regelfall nicht gerechnet werden kann, ist weiterhin ein nicht flüchtiger Speicher vorgesehen, in den die in der peripheren Schaltungsanordnung zwischengespeicherte Information eingeschrieben wird, bevor die Versorgungsspannung so weit abgesunken ist, daß diese Information in den anderen Schaltungseinheiten, mit deren Hilfe sie im regulären Betrieb bearbeitet und zwischengespeichert wird, verloren geht.

Das Absinken der Versorgungsspannung wird mit Hilfe einer Überwachungsschaltung überwacht, die ein einen Speichervorgang auslösendes Steuersignal abgibt, wenn ein kritischer Spannungsgrenzwert unterschritten wird.

Die grundlegende Erkenntnis besteht somit darin, daß es mit Hilfe geeigneter Energieumformer, wie sie in der EP-A-0 658 745 beschrieben sind, möglich ist, alle Signalgewinnungs-, Aufbereitungsund Speichervorgänge, wie sie bei einem Positionsgeber wie z.B. einem Multiturn zur Ermittelung eines Grobmeßwertes erforderlich sind, aus dem Energieanteil zu speisen, der sich auch bei sehr langsamen Bewegungen aus diesen Bewegungen abzweigen läßt. Kommt die Bewegung völlig zum Erliegen, so ändert sich an der zuletzt gewonnenen Stellungsinformation nichts, die im nicht flüchtigen Speicher gesichert ist, und die gesamte periphere Elektronik kann in einen praktisch strom- und spannungslosen Ruhezustand übergehen. Sobald aber die Bewegung wieder einsetzt und eine vorgegebene Position durchlaufen wird, zweigt der Energieumformer wieder genügend Bewegungsenergie ab, um zumindest einen die neue Stellung beschreibenden Grobwert ermitteln und im nicht flüchtigen Speicher sicher ablegen zu können.

Sowohl aus US-A-3 826 985 als auch WO-A 88/04780 sind Schaltungsanordnungen für Drehzahlgeber bekannt, bei denen das Rad, dessen Drehzahl ermittelt werden soll, eine Vielzahl von Zacken aufweist, die jeweils mit einem Magneten belegt sind und aufgrund einer Drehung des Rades an einer Induktionspule vorbeilaufen, in der jeder der Zacken ein Strom/Spannungs-Stoß induziert. Diese mit einer von der Drehgeschwindigkeit des Zackenrades abhängenden Folgefrequenz auftretenden Strom/Spannungs-Stöße werden insbesondere bei der Vorrichtung gemäß der US-A-3 826 985 nicht nur als Tachometersignal sondern auch dazu verwendet, nach Gleichrichtung einen Kondensator zu laden, der die Versorgungsspannung für die nachfolgende elektronische Schaltungsanordnung liefert. Beiden Systemen ist gemeinsam, daß sie nur so lange arbeiten, so lange die Drehgeschwindigkeit des jeweiligen Zackenrades einen bestimmten Mindestwert nicht unterschreitet, da die Energie, die in einem induzierten Strom/Spannungs-Stoß enthalten ist, wenn sich ein Zacken des Zackenrades nur sehr langsam an der jeweiligen Induktionsspule vorbei bewegen, nicht ausreicht, um die Energieversorgung für die nachgeschaltete Elektronik aufrecht zu erhalten. Insofern unterscheiden sich diese bekannten Anordnungen grundlegend von dem gemäß der Erfindung verwendeten Energieumformer.

Auch weisen die bekannten Schaltungsanordnungen weder eine Überwachungsschaltung auf, die eine Annäherung der vom Energiespeicher gelieferten Versorgungsspannung an einen kritischen Spannungsgrenzwert erkennt, noch einen nicht flüchtigen Informationsspeicher, in den ein die zu überwachende Stellung kennzeichnendes digitales Signal eingelesen wird, wenn die Versorgungsspannung den kritischen Spannungsgrenzwert zu unterschreiten droht.

Eine gewisse Schwierigkeit ergibt sich aus der Tatsache, daß die geeignetsten nicht flüchtigen Speicher, die auch bei langzeitigem Ausfall der Versorgungsspannung die in sie eingeschriebene Information nicht verlieren, sogenannte EEPROM-Speicher sind, die nur eine begrenzte Zahl von Schreibvorgängen erlauben. Zwar liegt diese Zahl in der Größenordnung von einigen 100 000, doch würde dies dann, wenn regelmäßig pro Sekunde z.B. 100 Schreibvorgänge durchgeführt werden müßten, zu einer inakzeptabel kurzen Lebensdauer führen.

Um dies zu vermeiden, muß zunächst die Häufigkeit der Schreibvorgänge so weit wie möglich verringert werden. Zu diesem Zweck wird man versuchen, einerseits pro Strom-Spannungs-Stoß möglichst viel elektrische Energie in den Energiespeicher zu laden und andererseits durch die Auswahl energiesparender Schaltungen und Bauelemente die gespeicherte Energie möglichst ökonomisch zu nutzen. Insbesondere dann, wenn eine kleine Bauform für den Energieumformer erforderlich ist, stößt man hier aber sehr rasch an Grenzen, so daß sich allenfalls erreichen läßt, daß, wie oben bereits erwähnt, ein Strom-Spannungs-Stoß Energie für eine Betriebsdauer von einigen Sekunden liefert. Treten dann aufgrund einer entsprechend hohen Geschwindigkeit der zu überwachenden Bewegung die Strom-Spannungs-Stöße mit einer solchen zeitlichen Dichte auf, daß die Versorgungsspannung nicht unter den kritischen Wert abzusinken droht, werden auch keine Speichervorgänge erforderlich. Sind im umgekehrten Fall die zeitlichen Abstände zwischen den Strom-Spannungs-Stößen und somit zwischen den Aktivitätsphasen der peripheren Schaltungsanordnung sehr groß, so muß zwar am Ende einer jeden solchen Phase ein Speichervorgang durchgeführt werden, doch bleibt die Zahl der Speichervorgänge pro Zeiteinheit ebenfalls klein und eine lange Lebensdauer wird nicht wesentlich gefährdet.

Kritisch ist dagegen eine kriechende oder schleichende Bewegung, bei der die Strom-Spannungs-Stöße mit zeitlichen Abständen auftreten, die geringfügig länger sind als die Zeiträume, für welche die Energie, die aus einem Strom-Spannungs-Stoß gewonnen und gespeichert werden kann, einen regulären Betrieb aufrechtzuerhalten vermag. Es muß dann jeweils kurz vor dem nächsten Strom-Spannungs-Stoß ein Schreibvorgang ausgeführt werden, und wenn dies über lange Zeiträume hinweg alle paar Sekunden geschieht, so kann sich ohne weitere Maßnahmen die Lebensdauer der EEPROM-Speicher sehr rasch erschöpfen.

Um hier Abhilfe zu schaffen, ist in Weiterbildung der Erfindung als erster Schritt vorgesehen, mit Hilfe einer geeigneten Logikschaltung vor der Durchführung eines Schreibvorganges für jede einzelne Speicherzelle zu überprüfen, ob der neu einzuschreibende Logikwert ("EINS" oder "NULL") gleich dem gespeicherten Wert ist oder nicht, und nur bei Verschiedenheit dieser beiden Werte einen Schreibvorgang für die betreffende Zelle durchzuführen.

Geht man davon aus, daß in die Speicherzellen die an den Parallelausgängen eines reinen Binärzählers anliegenden Logikwerte eingeschrieben werden sollen, so wird also für die Zelle, die das geringstwertige Bit zu speichern hat, bei einem drohenden Spannungsverlust nur dann ein Schreibvorgang erforderlich, wenn seit dem letzten Schreibvorgang eine ungerade Anzahl von Zählimpulsen aufgetreten ist. Somit verdoppelt sich in all den Anwendungsfällen die Lebensdauer des Speichers, in denen die Wahrscheinlichkeit, daß zwischen zwei Spannungsausfällen eine gerade Anzahl von Zählimpulsen auftritt, gleich der Wahrscheinlichkeit für das Auftreten einer ungeraden Anzahl ist.

Wenn sich auf diese Weise auch bereits eine deutliche Verlängerung der Lebensdauer erzielen läßt, so bleibt doch die Tatsache, daß die Speicherzellen, die zur Speicherung der Bits mit den niedrigen Wertigkeiten verwendet werden, ohne zusätzliche Maßnahmen häufiger durch Schreibimpulse belastet werden, als die Speicherzellen für die höherwertigen Bits, deren Logikwert sich wesentlich seltener ändert.

Da Speicher der hier in Rede stehenden Art aber dann funktionsunfähig werden, wenn die am häufigsten belastete Zelle die maximal zulässige Anzahl von Schreibvorgängen durchlaufen hat, sieht die Erfindung weitere Maßnahmen vor, um zu einer möglichst guten Gleichverteilung der Schreibvorgänge auf alle vorhandenen Speicherzellen zu kommen.

Diese Maßnahmen können darin bestehen, daß nach einer vorgebbaren Anzahl von Schreibvorgängen die Wertigkeiten der Speicherzellen systematisch, vorzugsweise zyklisch vertauscht werden.

Eine weitere Möglichkeit besteht darin, mehr beschreibbare Speicherzellen vorzusehen, als der Zähler, dessen Zählerstand gespeichert werden soll, Parallelausgänge besitzt, so daß immer eine Gruppe von Speicherzellen unbenutzt bleibt. Auch hier kann nach einer vorgebbaren Anzahl von Schreibvorgängen eine Vertauschung stattfinden, so daß nach und nach bisher unbenutzte Speicherzellen in die Benutzung einbezogen und bereits stark benutzte Speicherzellen stillgelegt werden.

Eine dritte Möglichkeit besteht darin, dem Speicher den Zählerstand in einer derart kodierten Form zuzuführen, daß es im zeitlichen Mittel für die Speicherzellen zu einem in etwa gleich häufigen Wechsel zwischen logisch "EINS" und logisch "NULL" kommt.

Um zu einer besonders langen Lebensdauer für die Speicherelemente zu gelangen, können die eben genannten Maßnahmen nicht nur alternativ sondern auch in Verbindung miteinander ergriffen werden.

Die beiden zuerst genannten Maßnahmen haben zur Folge, daß der bei einem drohenden Spannungsverlust im betreffenden Zähler enthaltene Zählerstand in einer veränderten Darstellungsform in den zugehörigen Speicher eingeschrieben wird, wobei diese Darstellungsänderung mit Hilfe eines Kodierers erfolgt. Steht dann wieder ausreichend Versorgungsspannung zur Verfügung, muß vor dem Zurückschreiben des im Speicher gespeicherten Zählerstandes in den Zähler die eben erwähnte Darstellungsformänderung rückgängig gemacht werden. Hierzu ist ein nach dem gleichen Kode wie der erwähnte Kodierer arbeitender Dekodierer vorgesehen.

Eine weitere Maßnahme zur Verlängerung der Lebensdauer besteht darin, nicht bei jedem merklichen Absinken der Versorgungsspannung sofort einen Schreibvorgang durchzuführen. Zu diesem Zweck wird mit einer Versorgungsspannungsquelle, beispielsweise einem Kondensator gearbeitet, die im Normalfall eine wesentlich höhere Spannung liefert, als sie zur Aufrechterhaltung der regulären Funktion des Zählers erforderlich ist. Bevor diese Spannung auf einen vorgegebenen Bruchteil, beispielsweise 50 % ihres regulären Wertes abgesunken ist, wird ein Schreibvorgang ausgelöst. Dies hat einerseits den Vorteil, daß immer noch ausreichend Spannung zur Verfügung steht, um den Schreibvorgang vollständig durchführen zu können, bevor ein Datenverlust eintritt. Andererseits wird indirekt eine Zeitverzögerung bewirkt, die in all den Fällen, in denen die Spannungsversorgung vor Ablauf der Verzögerungszeit wieder ihren alten Wert annimmt, verhindert, daß es überhaupt zu einem Schreibvorgang kommt. Dies ist vor allem dann von großer Bedeutung, wenn zwar mit häufigen aber meistens nur kurze Zeit andauernden Spannungseinbrüchen zu rechnen ist.

Die eben beschriebene Zeitverzögerung kann entweder mit Hilfe eines Oszillators mit nachgeschaltetem Zähler oder mit Hilfe eines Komparators realisiert werden, der die tatsächlich anliegende Versorgungsspannung mit einer Referenzspannung vergleicht.

Vorteilhafte Abwandlungen und Weiterbildungen der erfindungsgemäßen Schaltungsanordnung sind in den Unteransprüchen niedergelegt.

Die Erfindung wird im folgenden anhand von Ausführungsbeispielen unter Bezugnahme auf die Zeichnung beschrieben; in dieser zeigen:
- Fig. 1: eine schematisierte, perspektivische Darstellung eines zum Zählen der Umdrehungen und zum Erkennen der Drehrichtung einer Welle geeigneten Positionsdetektors mit zwei Energieumformern, die aus der Drehbewegung der Welle kinetische Energie entnehmen und in elektrische Energie umwandeln können,
- Fig. 2: ein vereinfachtes Block- und Signallaufschema einer zu einem erfindungsgemäßen Positionsgeber gehörenden Schaltungsanordnung, und
- Fig. 3: eine Prinzipdarstellung einer Spannungsüberwachungsschaltung mit einem Spannungskomparartor.

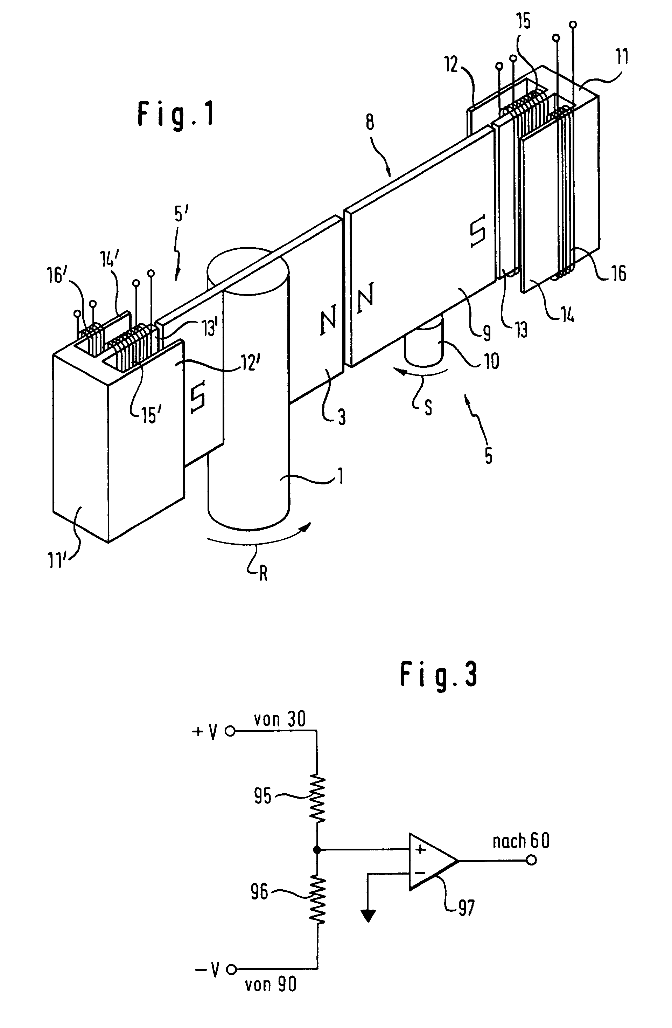

Der in Fig. 1 gezeigte Positionsdetektor ist in der Lage, auch bei extrem langsamen Drehbewegungen der Welle 1 immer dann ein gedämpftes, in einen Zählimpuls umformbares Schwingungssignal abzugeben, wenn die Welle 1 eine vorgegebene Winkelstellung durchläuft. Dabei ist in diesen gedämpften Schwingungssignalen immer ausreichend Energie enthalten, um eine entsprechend ausgebildete nachgeordnete Auswerteelektronik mit einer ausreichenden Menge an elektrischer Energie zu versorgen, sodaß die Auswerteelektronik auch dann einen Zählvorgang durchführen und den neu erhaltenen Zählwert abspeichern kann, wenn ansonsten keine andere Versorgungsquelle für elektrische Energie zur Verfügung steht oder die reguläre elektrische Energiequelle ausgefallen ist.

Zu diesem Zweck ist mit der Welle 1 ein Permanentmagnet 3 drehfest verbunden und so orientiert, daß seine Magnetpole radial nach außen weisen. Weiterhin umfaßt der Positionsdetektor einen Energieumformer 5, der ein Zwischenstück 8 mit einem Permanentmagneten 9 aufweist, der mit einer Welle 10 drehfest verbunden ist, die um eine zur Achse der Welle 1 parallele Achse drehbar ist.

Auch der Permanentmagnet 9 ist so ausgerichtet, daß die seine Pole verbindende Achse bezüglich der Welle 10 radial verläuft. Der Abstand der Wellen 1 und 10 sowie die radialen Längen der Magneten 3 uns 9 sind so bemessen, daß sich die Magneten 3 und 9 mit ihren radialen Stirnflächen knapp aneinander vorbeibewegen können.

Auf dem von der Achse der Welle 1 ausgehenden Radius, auf dem die Achse der Welle 10 liegt, ist noch weiter außen ein E-förmiger Wecheisenkern 11 so angeordnet, daß seine drei E-Schenkel 12, 13, 14 nach innen zur Welle 1 hin, vorzugsweise zueinander parallel orientiert sind, wobei der mittlere Schenkel 13 genau auf dem oben erwähnten Radius liegt, während die beiden äußeren Schenkel 12 und 14 in Drehrichtung der Welle 10 gesehen um einige Bogengrade vor bzw. hinter dem mittleren Schenkel 12 liegen. Der Abstand des E-Kerns 11 von der Welle 10 ist so gewählt, daß sich die Pol-Stirnflächen des Permanentmagneten 9 bei dessen Drehung um die Achse der Welle 10 in geringem Abstand an der radial nach innen weisenden Stirnfläche des mittleren Schenkels 13 vorbeibewegen können. Zu den äußeren Schenkeln muß ein größerer Abstand eingehalten werden, damit der im Prinzip frei drehbare Permanentmagnet 9 vorzugsweise eine Ausgangsstellung einnimmt, in der er radial zur Achse der Welle 1 hin ausgerichtet ist und sich aufgrund des von ihm im Weicheisenkernen 11 induzierten Magnetfeldes an diesem "festhält".

Auf den mittleren Schenkel 13 des Weicheisenkerns 11 ist eine Induktionsspule 15 gewickelt, während der eine äußere Schenkel 14 eine Hilfsspule 16 trägt.

Ein weiterer Energieumformer 5' wird von einem E-förmigen Weicheisenkern 11' gebildet, der ebenfalls so angeordnet ist, daß seine Schenkel 12', 13', 14' nach innen zur Welle 1 hin orientiert sind, wie dies oben für den Kern 11 beschrieben wurde. In Fig. 1 liegen sich die Kerne 11 und 11' diametral gegenüber, doch ist dies nicht erforderlich. Es ist jede Winkelstellung möglich, in der sich die beiden Anordnunen nicht gegenseitig stören.

Zur Erläuterung der Funktionsweise wird zunächst der Energieumformer 5 betrachtet, wobei angenommen wird, daß der mit der Welle 1 drehfest verbundene Permanentmagnet 3 bei einer Bewegung in Richtung des Pfeiles R noch nicht die in Fig. 1 gezeigte sondern eine davor befindliche Position erreicht hat, in der sich sein Nordpol in zunehmendem Maß dem Nordpol des Permanentmagneten 9 nähert. Letzterer bleibt zunächst trotz der größer werdenden abstoßenden Kräfte zwischen diesen beiden Polen in seiner mit dem Nordpol radial nach innen gerichteten Lage, weil sich sein Südpol am Eisenkern 11 "festhält". Nähert sich der Nordpol des Permanentmagneten 3 weiter an den Nordpol des Permanentmagneten 9 an, so wird bereits vor Erreichen der in Fig. 1 gezeigten, tatsächlich nie als stabile Lage auftretenden Stellung eine Winkelstellung der Welle 1 erreicht, in der die abstoßenden Kräfte zwischen diesen beiden Nordpolen größer werden, als die anziehenden Kräfte zwischen dem Permanentmagneten 9 und dem Weicheisenkern 11.

Zu diesem Zeitpunkt wird der Permanentmagnet 9 für eine Drehbewegung in Richtung des Pfeiles S stark beschleunigt, wobei kurz nach Verlassen der radial ausgerichteten Ausgangslage nicht nur die abstoßenden Kräfte zwischen seinem Nordpol und dem Nordpol des Permanentmagneten 3 sondern auch die anziehenden Kräfte zwischen seinem Südpol und dem Nordpol des Permanentmagneten 3 wirksam werden. Aufgrund dieser doppelten Kraftwirkung hat der Permanentmagnet 9 eine sehr hohe Drehgeschwindigkeit erreicht, wenn er mit seinem Nordpol-Ende auf den Kern 11 der Induktionsspule 15 zu und an diesem vorbeiläuft.

Dies hat zur Folge, daß der vom Permanentmagneten 9 ausgehende Magnetfluß zunächst durch den außen liegenden E-Schenkel 12 in den Eisenkern 11 ein- und im wesentlichen durch den mittleren Schenkel 13 wieder austritt. Die dabei vorgegebene Magnetflußrichtung kehrt sich dann schlagartig um, wenn die dem Kern 11 zugewandte Stirnfläche des Permanentmagneten 9 den kurzen Bogen zwischen dem außen liegenden Schenkel 12 und dem mittleren Schenkel 13 durchlaufen hat. Hierdurch wird ein sehr großes dφ/dt erreicht, das beispielsweise einen positiven Spannungsimpuls an den Ausgängen der Induktionsspule 15 erzeugt. Durchläuft dann die Stirnfläche des Permanentmagneten 9 das weitere kleine Bogenstück zwischen dem mittleren Schenkel 13 und dem anderen außen liegenden E-Schenkel 14 des Kerns 11, so kehrt sich die Magnetflußrichtung im Eisenkern erneut um, so daß nunmehr ein nahezu gleich großer negativer Spannungsimpuls induziert wird.

Beim Vorbeilaufen der Stirnfläche des Permanentmagneten 9 am äußeren E-Schenkel 14 wird in der auf diesen Schenkel gewickelten Hilfsspule 16 ebenfalls ein Spannungsstoß induziert, der zumindest ausreicht, um für die Auswerteelektronik ein Signal zu liefern, aus dessen zeitlichem Auftreten vor oder nach dem Strom-Spannungs-Stoß in der Induktionsspule 15 die Drehrichtung des Permanentmagneten 9 und damit auch erkannt werden kann, in welcher Richtung sich die Welle 1 gedreht hat.

Auch ein Hin- und Herpendeln einer der Stirnseiten des Magneten 9 vor den Schenkeln des Kerns 11 kann auf diese Weise festgestellt werden.

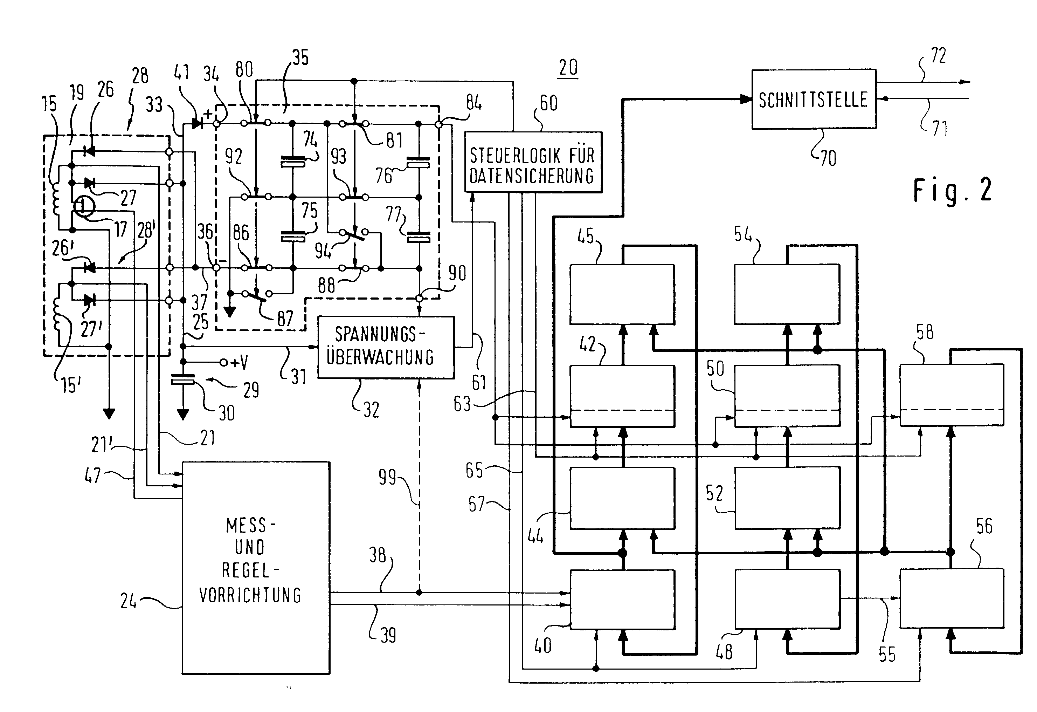

Sobald die Induktionsspule 15 genügend elektrische Energie abgegeben hat, um eine Signalauswertung und Energiespeicherung durchzuführen, können ihre Ausgänge durch den in Fig. 2 gezeigten Transistor 17 kurzgeschlossen oder vergleichsweise niederohmig miteinander verbunden werden. Dadurch wird die ansonsten längere Zeit andauernde Drehbewegung des Permanentmagneten 9 so stark bedämpft, daß er mit seinem Nordpol nur wenig an der ihm zugewandten Stirnseite des Kerns 11 vorbeiläuft um dann in eine Lage zurückzukehren, die gegen die in Fig. 1 wiedergegebene Lage um 180° gedreht ist.

Wesentlich ist, daß die beschriebene schnelle Drehbewegung des Permanentmagneten 9 insofern von der Geschwindigkeit, mit der die Welle 1 und der mit ihr verbundene Permanentmagnet 3 auf die vorgebbare Winkelposition zulaufen, weitgehend unabhängig ist, als sie einen Mindestwert nicht unterschreitet. Somit ist hier ein Energieumformer realisiert, der auch bei extrem langsamen Drehbewegungen der Welle 1 einen Teil ihrer kinetischen Energie entnimmt und in einen Strom-Spannungs-Stoß vergleichsweise hoher Leistung umformt, der der Auswerteelektronik nicht nur ein Signal zum Zählen der Wellenumdrehungen sondern auch einen elektrischen Energievorrat liefert, der ihren Betrieb für eine gewisse Zeitspanne sicherstellt.

Dreht sich die Welle 1 über die in Fig. 1 gezeigte Position um weitere 180° in Richtung des Pfeiles R, so läuft der Südpol des Permanentmagneten 3 auf den jetzt radial nach innen weisenden Südpol des Permanentmagneten 9 zu und es erfolgt bei einer Fortsetzung dieser Drehbewegung der gleiche Energieumwandlungsvorgang, wie er eben beschrieben wurde. Der einzige Unterschied besteht darin, daß die in den Induktionsspulen 15 und 16 induzierten Spannungsimpulse umgekehrte Vorzeichen besitzen.

Bei dem Energieumformer 5' fehlt das Zwischenteil 8. Daher werden in den auf den E-Kern 11' gewickelten Spulen 15' und 16' bei sehr langsamen Drehungen der Welle 1 nur schwache Strom-Spannungs-Stöße induziert, die im allgmeinen nicht als Energielieferanten für die Auswerteelektronik geeignet sind.

Etwas anderes gilt aber dann, wenn sich die Welle 1 sehr schnell dreht. In diesem Fall ist es möglich, daß der Permanentmagnet 9 des Zwischenstücks 8 der Bewegung der Welle nicht mehr zu folen vermag und unter Umständen nahezu stehen bleibt. Dann läuft aber der Permanentmagnet 3 mit so großer Geschwindigkeit am Weicheisenkern 11' vorbei, daß in den Spulen 15', 16' ein ausreichend großes dφ/dt erzeugt wird und die von diesen Spulen abgegebenen Strom-Spannungs-Stöße mit den oben für die Spulen 15 und 16 beschriebenen vergleichbar sind und ebenso wie diese verwendet werden können.

Wie man der Fig. 2 entnimmt, umfaßt die Eingangsstufe 19 der dort wiedergegebenen Schaltungsanordnung 20 für einen elektronischen Umdrehungszähler die beiden Induktionsspulen 15, 15' des in Fig. 1 gezeigten Positionsdetektors.

Das eine Ende einer jeden Spule 15, 15' ist mit Masse verbunden, während das jeweils andere Ende einerseits über eine Leitung 21, 21' mit einer Meß- und Regelschaltung 24 und andererseits mit zwei Dioden 26, 27 bzw. 26', 27' verbunden ist, die jeweils einen Zweiweg-Gleichrichter 28, 28' bilden.

Die positiven Ausgänge der beiden Gleichrichter 28, 28' sind miteinander und über eine Leitung 25 mit einem von einem Kondensator 30 gebildeten Energiespeicher 29, eine Leitung 31 mit einer Spannungsüberwachungsschaltung 32 und eine Leitung 33, in der eine Entkoppelungsdiode 41 liegt, mit dem positiven Eingang 34 einer Kondensatoranordnung 35 verbunden.

Die negativen Ausgänge der Gleichrichter 28, 28' sind ebenfalls miteinander verbunden und über eine Leitung 37 an den negativen Eingang 36 der Kondensatoranordnung 35 gelegt.

Die mit den positiven Ausgängen der Gleichrichter 28, 28' verbundene Seite des Spannungsversorgungskondensators 30 ist mit allen entsprechenden Versorgungsspannungsanschlüssen der in Fig. 2 gezeigten Schaltungsanordnungen verbunden; dies wird durch den Anschlußpunkt +V symbolisiert. Die von dort zu den Schaltungseinheiten weiterführenden Leitungen sind der besseren Übersichtlichkeit wegen weggelassen.

Wie bereits erwähnt, liegt parallel zur Induktionsspule 15 ein Transistor 17, mit dessen Hilfe die Drehbewegung des Permanentmagneten 9 (Fig. 1) abgebremst werden kann. Die hierzu erforderlichen Steuersignale erhält der Transistor 17 von der Meß- und Regelschaltung 24 über die Leitung 47.

Die in Fig.1 gezeigten Hilfsspulen 16, 16' sind hier der besseren Übersichtlichkeit halber weggelassen. Tatsächlich ist aber jeweils ihr eines Wicklungsende mit der Systemmasse und ihr anderes Wicklungsende über eine den Leitungen 21, 21' entsprechende Leitung mit der Meß- und Regelschaltung 24 verbunden.

Weiterhin führen von der Meß- und Regelschaltung 24 zwei Leitungen 38, 39 zu einem die Umdrehungen der Welle 1 (Fig. 1) zählenden Hauptzähler 40. Dabei dient die Leitung 38, die mit dem Takteingang des Hauptzählers 40 verbunden ist, zur Übertragung von Zählimpulsen, von denen die Meß- und Regelschaltung 24 beispielsweise immer dann einen erzeugt, wenn der mit der Welle 1 verbundene Permanentmagnet 3 eine Winkelstellung erreicht, in der er den Permanentmagneten 9 in der oben beschriebenen Weise veranlaßt, sich aus seiner Ruhelage heraus schnell um 180° zu drehen und dabei in der Spule 15 einen Strom-Spannungs-Stoß zu erzeugen, der zumindest aus einer positiven und einer negativen Halbwelle besteht. Dieses Schwingungssignal wird über die Leitung 21 der Meß- und Regelschaltung 24 zugeführt, die aus ihm einen Zählimpuls für den Hauptzähler 40 ableitet.

Aus der Reihenfolge, in der die erwähnten Schwingungssignale an den Induktionsspulen 15 und 16 bzw. 15' und 16' auftreten, bildet die Meß- und Regelschaltung 24 überdies ein Richtungssignal, das über die Leitung 39 dem Hauptzähler 40 zugeführt wird und diesen veranlaßt, beim Auftreten eines Zählimpulses auf der Leitung 38 seinen Zählerstand um den Wert "1" zu erhöhen oder zu erniedrigen.

Eine solche Ausbildung des Zählers 40 kommt z.B. dann zur Verwendung, wenn aus der Anzahl der Umdrehungen der Welle 1 ein Grobmeßwert für die Position eines Schlittens einer Werkzeugmaschine oder dergleichen gewonnen werden soll, da es in solchen Fällen wichtig ist, die Drehrichtung der Welle 1 zu erfassen. Soll dagegen nur die Absolutzahl der Umdrehungen der Welle 1 ermittelt werden, um z.B. eine Lebensdauer-Überwachung durchzuführen, so können die Hilfsspulen 16 und 16' aus Fig. 1 und die Leitung 39 in der Fig. 2 weggelassen und der Hauptzähler 40 als einfacher Inkrementer ausgebildet werden.

In jedem Fall ist der Hauptzähler 40 so aufgebaut, daß er den in ihm enthaltenen Zählerstand verliert, wenn seine Versorgungsspannung unter einen unteren Grenzwert absinkt. Um trotzdem die sich aus diesem Zählerstand ergebende Information nicht zu verlieren und beim Wiederanlegen einer ausreichenden Versorgungsspannung zur Verfügung zu haben, umfaßt die erfindungsgemäße Schaltungsanordnung 20 einen als EEPROM ausgebildeten Hauptinformationsspeicher 42, der eine in ihm enthaltene Information auch dann nicht verliert, wenn er für eine sehr lange Zeit nicht mit Betriebsspannung versorgt wird, und dessen Paralleleingänge mit Hilfe von Mehrfachleitungen, die in Fig. 2 durch breite Linien symbolisiert sind, über einen Kodierer 44 mit den Parallelausgängen des Hauptzählers 40 verbunden sind, so daß der im Hauptzähler 40 enthaltene Zählerstand noch rechtzeitig in den Hauptinformationsspeicher 42 eingeschrieben werden kann, wenn die Spannungsüberwachungsschaltung 32 ein kritisches Absinken der Versorgungsspannung feststellt.

Um nach dem Wiederanliegen einer ausreichenden Versorgungsspannung den im Hauptinformationsspeicher 42 enthaltenen Zählerstand in den Hauptzähler 40 einlesen zu können, sind die Parallelausgänge des Hauptinformationsspeichers 42 mit Hilfe entsprechender Mehrfachleitungen mit den Paralleleingängen des Hauptzählers 40 über einen Dekodierer 45 verbunden, der die vom Kodierer 44 durchgeführte Änderung der Darstellung des Zählerstandes wieder rückgängig macht, so daß dieser Zählerstand in seiner ursprünglichen Form vorliegt und der Hauptzähler gegebenenfalls unverzüglich weiterzählen kann.

Weiterhin umfaßt die erfindungsgemäße Schaltungsanordnung 20 einen als reiner Inkrementer aufgebauten Hilfszähler 48, der, wie dies noch genauer erläutert wird, für jeden Schreibvorgang, mit dem ein im Hauptzähler 40 enthaltener Zählwert in den Hauptinformationsspeicher 42 übertragen wird, seinen Zählerstand um den Wert "1" erhöht.

Da bei einem kritischen Absinken der Versorgungsspannung auch der Zählerstand des Hilfszählers 48 erhalten bleiben muß, ist ihm in entsprechender Weise wie dem Hauptzähler 40 ein als EEPROM ausgebildeter Hilfsinformationsspeicher 50 in der Weise nachgeordnet, daß die Parallelausgänge des Hilfszählers 48 über einen Hilfskodierer 52 mit den Paralleleingängen des Hilfsspeichers 50 verbunden sind, der ebenfalls die in ihm enthaltene Information über lange Zeiträume hinweg auch dann nicht verliert, wenn an ihm keine Betriebsspannung anliegt. Damit beim Wiederanliegen der Versorgungsspannung die im Hilfsinformationsspeicher 50 enthaltene Information in ihrer ursprünglichen Form in den Hilfszähler 48 zurückübertragen werden kann, sind die Parallelausgänge des Hilfsinformationsspeichers 50 mit den Paralleleingängen des Hilfszählers 48 über einen Hilfsdekodierer 54 verbunden, der die vom Hilfskodierer 48 durchgeführte Änderung der Darstellungsform des Zählerstandes des Hilfszählers 48 rückgängig macht.

Jedesmal dann, wenn der Hilfszähler 48 einen vorgewählten Zählerstand erreicht hat und deswegen auf der Leitung 55 ein Überlaufsignal abgibt, wird der Kode geändert, mit dem die Kodierer 44 und 52 die Darstellungsform der in den zugehörigen Zählern 40, 48 enthaltenen Zählerstände ändern bzw. die Dekodierer 45, 54 diese Änderung wieder rückgängig machen. Zu diesem Zweck umfaßt die erfindungsgemäße Schaltungsanordnung 20 einen Kodegenerator 56, der immer dann einen neuen Kode ausgibt, wenn er über die Leitung 55 ein entsprechendes Befehlssignal vom Hilfszähler 48 erhält. Im einfachsten Fall ist der Kodegenerator als Inkrementer aufgebaut, der seinen Zählerstand bei jedem Überlauf des Hilfszählers 48 um den Wert "1" erhöht.

Da der Kodegenerator 56 ebenso wie die beiden Zähler 40, 48 als Schaltung aufgebaut ist, die die in ihr gespeicherte Information bei einem zu starkem Absinken der Versorgungsspannung verliert, ist ein zweiter als EEPROM ausgebildeter Hilfsinformationsspeicher 58 vorgesehen, dessen Paralleleingänge unmittelbar mit den Parallelausgängen des Kodegenerators 55 verbunden sind und der bei Ausfall der Versorgungsspannung den zuletzt verwendeten Kode übernimmt und bis zum Wiederanliegen der Versorgungsspannung speichert. Da dieser Kode unmittelbar in der vom Kodegenerator 56 verwendeten Darstellungsform gespeichert wird, ist für die Rückübertraggung kein Dekodierer erforderlich, so daß die Parallelausgänge des zweiten Hilfsinformationsspeichers 58 unmittelbar mit den Paralleleingängen des Kodegenerators 56 verbunden sein können.

Die Steuerung der Schreibvorgänge, mit denen die in den Zählern 40, 48 und dem Kodegenerator 56 enthaltene Information in den Hauptinformationsspeicher 42 bzw. die Hilfsinformationsspeicher 50, 58 übertragen wird, bzw. die Rückübertragung dieser Informationen aus den Speichern 40, 50, 58 in die Zähler 40, 48 und den Kodegenerator 56 erfolgt unter der Regie einer Steuerlogik 60 für die Datensicherung, die einerseits über eine Leitung 61 von der Spannungsüberwachungsschaltung 32 immer dann ein Steursignal erhält, wenn die Versorgungsspannung unter einen kritischen Wert abzusinken droht und andererseits über eine Befehlsleitung 63 mit den "Schreib"-Eingängen der EEPROM-Speicher 42, 50 und 58 sowie eine Befehlsleitung 65 mit den "Preset"-Eingängen des Hauptzählers 40 und des Hilfszählers 48 sowie eine Befehlsleitung 67 mit dem "Preset"-Eingang des Kodegenerators 56 verbunden ist.

Um den im Hauptzähler 40 enthaltenen Zählerstand an einen externen Verwender abgeben zu können, sind die Parallelausgänge des Hauptzählers 40 mit einer entsprechenden Zahl von Eingängen einer Schnittstelle verbunden, die dann, wenn sie vom Verwender ein entsprechendes Aufforderungssignal über die Leitung 71 erhält, die ihr parallel zugeführte Information über die Leitung 72 z.B. seriell ab-geben kann.

Die Kondensator-Anordnung 35 umfaßt zwei fest miteinander in Reihe geschaltete Kondensatoren 74, 75 und zwei fest miteinander in Reihe geschaltete Kondensatoren 76, 77. Die eine Seite der aus den Kondensatoren 74, 75 bestehenden Reihenschaltung ist über einen steuerbaren Schalter 80 mit dem positiven Eingang 34 und über einen weiteren steuerbaren Schalter 81 mit dem positiven Ausgang 84 der Kondensator-Anordnung 35 verbindbar, mit dem auch eine Seite der aus den Kondensatoren 76, 77 bestehenden Reihenschaltung fest verbunden ist.

Die andere Seite der Reihenschatlung 74, 75 ist über einen steuerbaren Schalter 86 mit dem negativen Eingang 36, einen steuerbaren Schalter 87 mit der Systemmasse und über einen steuerbaren Schalter 88 mit dem negativen Ausgang 90 der Kondensator-Anordnung 35 verbindbar, mit dem die andere Seite der aus den Kondensatoren 76, 77 bestehenden Reihenschaltung fest verbunden ist.

Der Verbindungspunkt der beiden Kondensatoren 74, 75 kann über einen steuerbaren Schalter 92 mit der Masse und über einen steuerbaren Schalter 93 mit dem Verbindungspunkt der beiden Kondensatoren 76, 77 verbunden werden. Schließlich ist die mit den Schaltern 80, 81 verbundene positive Seite der Reihenschaltung 74, 75 über einen steuerbaren Schalter 94 mit der negativen Seite der Reihenschaltung 76, 77 verbindbar.

Die Schalter 80, 81, 86, 87, 88, 92, 93 und 94 werden von der Steuerlogik 60 gleichzeitig und gemeinsam so angesteuert, daß sie zwei verschiedene Schaltzustände annehmen können. Im ersten Schaltzustand, der in Fig. 2 wiedergegeben ist, sind die Schalter 80, 81, 86, 88 und 92, 93 geschlossen, während die Schalter 87 und 94 geöffnet sind. Im zweiten Schaltzustand sind dagegen die Schalter 80, 81, 86, 88 und 92, 93 geöffnet und die Schalter 87, 94 geschlossen.

Der positive Ausgang 84 der Kondensator-Anordnung 35 liefert eine erhöhte Schreibspannung für die Speicher 42, 50, 58, während der negative Ausgang 90 mit der Spannungsüberwachungsschaltung 32 verbunden ist.

Die in Fig. 3 gezeigte Spannungsüberwachungsschaltung 32 umfaßt einen Spannungsteiler aus zwei Widerständen 95, 96, deren Widerstandswerte beispielsweise im Verhältnis 1:2 stehen. Wird dann an den mit dem Spannungsversorgungskondensator 30 verbundenen positiven Eingang die Versorgungsspannung +V und an den mit dem negativen Ausgang 90 der Kondensatoranordnung 35 verbundenen Eingang die zunächst den gleichen Absolutwert aufweisende Spannung -V angelegt, so liegt der mit dem positiven Eingang des Komparators 97 verbundene Verbindungspunkt der Widerstände 95, 96 auf einer Spannung, die um V/3 über dem Massepotential liegt und gleich 0 wird, wenn die am positiven Eingang anliegende Spannung auf den halben Wert der am negativen Eingang anliegenden Spannung abgesunken ist. Die beiden Widerstände 95, 96 können sehr hochohmig gewählt werden, so daß die in Fig. 3 gezeigte Komparatoranordnung nur sehr wenig Strom verbraucht. Über das Teilungsverhältnis des Spannungsteilers 95, 96 läßt sich der Bruchteil der am negativen Eingang anliegenden Spannung einstellen, unter dem die am positiven Eingang anliegende Spannung absinken muß, um den Komparator 97 zum Ansprechen zu bringen.

Bei der folgenden Erläuterung der Funktion der in den Fig. 2 und 3 gezeigten Schaltungen wird davon ausgegangen, daß der Kondensator 30 die einzige Spannungsversorgungsquelle der gezeigten Elektronik ist und durch die Schwingungssignale, die durch die sich drehende Welle 1 in den Spulen 15 bzw. 15' induziert werden, immer wieder auf seine maximale Spannung aufgeladen wird. Aufgrund der in der deutschen Patentanmeldung P 43 42 069.9 ausführlich beschriebenen Arbeitsweise des Energieumformers 5 enthalten die in der Spulen 15 induzierten Strom-Spannungs-Stöße bzw. Schwingungssignale, die wenigstens eine positive und eine negative Halbwelle umfassen, für diese Aufladung auch dann ausreichend elektrische Energie, wenn sich die Welle 1 nur sehr langsam dreht.

Zum Aufladen der Kondensatoren 74 bis 77 befinden sich die Schalter 80, 81, 86, 87, 88, 92, 93, 94 in der in Fig. 2 gezeigten Stellung, so daß der Kondensator 30 und die Kondensatoren 74 und 76 von der positiven Halbwelle auf eine Spannung +V und die Kondensatoren 75, 77 von der negativen Halbwelle auf die in etwa gleich große Spannung -V aufgeladen werden. Somit fällt über den Kondensator-Reihenschaltungen 74, 75 und 76, 77 jeweils die Spannung 2V ab, die sich aus den auf die Masse bezogenen Werte +V und -V zusammensetzt. Mit einem Energieumformer, der nach dem anhand von Fig. 1 erläuterten Prinzip arbeitet, läßt sich eine maximale Ladespannung für den Kondensator 30 erreichen, die etwa doppelt so hoch ist, wie die kritische Grenze Vₘᵢₙ, unterhalb derer die Zähler 40 und 48 sowie der Kodegenerator 50 die in ihnen gespeicherte Information zu verlieren drohen.

Da der Kondensator 30 als Stromversorgungsquelle für die gezeigten Schaltungseinheiten dient, nimmt nach jedem Ladevorgang die an ihm abfallende Spannung bis zum nächsten Ladevorgang ständig ab, während die Spannungen an den durch die Diode 41 entkoppelten Kondensatoren 74 und 76 sowie den Kondensatoren 75, 77 praktisch unverändert bleiben, da alle diese Kondensatoren während des in Fig. 2 gezeigten Schaltzustandes unbelastet sind. Solange sich also die Welle 1 mit einer ausreichenden Geschwindigkeit dreht bzw. um eine Stellung, in der der Energieumformer 5 immer wieder angestoßen wird, hin- und herpendelt, ist durch das ständige Wiederaufladen des Kondensators 30 die Stromversorgung der gesamten Schaltungsanordnung gesichert, so daß der Hauptzähler 40 die Impulse, die die Meß- und Regelschatlung 24 aus den von den Induktionsspulen 15, 16 bzw. 15', 16' gelieferten Schwingungssignalen ableitet und über die Leitung 38 an den Hauptzähler 40 weitergibt, unter Berücksichtigung der über die Leitung 39 kommenden Richtungsinformation zählen kann. Wenn der externe Anwender über die Leitung 71 ein Anforderungssignal an die Schnittstelle 70 liefert, so kann der vom Hauptzähler 40 jeweils erreichte Zählerstand ohne weiteres über die Leitung 72 ausgelesen werden. Eine Speicherung des im Hauptzähler 40 enthaltenen Zählerstandes im Hauptinformationsspeicher 42 erfolgt solange nicht, solange die am Spannungsversorgungskondensator 30 zur Verfügung stehende Spannung nicht unter den durch das Widerstandsverhältnis -er Widerstände 95, 96 (Fig. 3) der Spannungs überwachungsschaltung 32 festgelegten Wert absinkt.

Wird jedoch der zeitliche Abstand zwischen zwei aufeinanderfolgenden Schwingungssignalen der Spulen 15, 15' so groß, daß der eben erwähnte Grenzwert unterschritten wird, so gibt der Komparator 97 der Spannungsüberwachungsschaltung 32 über die Leitung 61 ein entsprechendes Informationssignal an die Steuerlogik 60 ab. Diese öffnet zunächst die Schalter 80, 81, 92, 93, 86, 88 und schließt die Schalter 87 und 94, so daß die ihr vom positiven Ausgang 84 der Kondensatoranordnung 35 zur Verfügung gestellte Spannung den Wert +4V gegen Masse annimmt. Diese vervierfachte Spannung ist mit Sicherheit ausreichend, um die von der Steuerlogik 60 über die Leitung 63 gleichzeitig veranlaßten drei Schreibvorgänge durchführen zu können. Dabei werden mit die Zählerstände des Hauptzählers 40 und des Hilfszählers 48 sowie der im Kodegenerator 56 enthaltene Kode in die zugehörigen EEPROM-Speicher 42, 50, 58 eingeschrieben, bevor die Versorgungsspannung so weit abgesunken ist, daß die in den Zählern 40, 48 und im Kodegenerator 56 enthaltene Information verloren geht.

Die Kondensatoranordnung 35, die durch die reguläre Stromaufnahme der Schaltungsanordnung 20 nicht belastet wird, übt hier also zwei Funktionen aus. Primär dient sie als Schreibenergiespeicher, der sicherstellt, daß immer ausreichend Energie zur Verfügung steht, wenn kurz vor einem kritischen Spannungsabfall die zu rettende Information dauerhaft abgespeichert werden muß. Zusätzlich hierzu kann sie in vorteilhafter Weise als Referenzspannungsquelle verwendet werden, die es ermöglicht, ein kritisches Absinken der Versorgungsspannung festzustellen.

In Fällen, in denen sich die Welle 1 über lange Zeiträume hinweg mit einer Drehzahl bewegen kann, bei denen die den Kondenstor ladenden Strom-Spannungs-Stöße gerade mit einem solchen zeitlichen Abstand auftreten, daß die Versorgungsspannung in kritischer Weise absinkt, treten die damit verbundenen Schreibvorgänge in die EEPROM-Speicher 42, 50 unter Umständen mit einer Häufigkeit auf, durch die ohne zusätzliche Maßnahmen die Lebensdauer der Gesamtanordnung zu sehr verkürzt würde, da EEPROM-Speicher zwar in der Lage sind, eine in ihnen gespeicherte Information auch bei fehlender Versorgungsspannung über sehr lange Zeiträume hinweg unverändert aufrechtzuerhalten, aber nur eine begrenzte Anzahl von Schreibvorgängen erlauben.

Um diesem Problem zu begegnen, ist als erster Schritt vorgesehen, an den Paralleleingängen eines jeden Speichers 42, 50, 58 eine durch eine gestrichelte Trennlinie angedeutete Logikschaltung vorzusehen, die beispielsweise aus einer Vielzahl von EXCLUSIV-ODER-Schaltungen mit invertiertem Ausgang bestehen kann, von denen jede für die zugeordnete Speicherzelle untersucht, ob der neu einzuschreibende Binärwert von dem bereits gespeicherten Binärwert verschieden ist, und mit Hilfe eines UND-Gatters nur dann einen Schreibvorgang zuläßt, wenn diese Bedingung erfüllt ist.

Da, wie unten noch genauer erläutert wird, der Kodegenerator 56 den von ihm abgegebenen Kode immer nur nach einer großen Anzahl von Schreibvorgängen ändert, ist die eben beschriebene Maßnahme völlig ausreichend, um eine lange Betriebs- bzw. Lebensdauer für den Speicher 58 zu gewährleisten.

Beim Hauptzähler 40, der jede volle Drehung der Welle 1 zählt und beim Hilfszähler 48, der seinen Zählerstand bei jedem Schreibvorgang um den Wert "1" erhöht, wechseln zumindest die Stellen mit den niedrigeren Wertigkeiten ihren Logikwert sehr häufig, so daß damit zu rechnen ist, daß der abzuspeichernde Wert häufig von dem gespeicherten Wert verschieden ist.

Um dennoch eine große Zahl von Schreibvorgängen zu ermöglichen und damit eine lange Lebensdauer der Gesamtanordnung zu erzielen, werden die in den Zählern 40 und 48 enthaltenen Zählerstände nicht unmittelbar parallel in die Speicher 42 und 50 eingeschrieben. Vielmehr ist jeweils ein Kodierer 44 bzw. 52 zwischengeschaltet, der unter der Steuerung des Kodegenerators 56 wenigstens eine, vorzugsweise aber beide der folgenden Funktionen ausübt:
1. Die Kodierer 44 und 52 können dazu verwendet werden, immer dann, wenn der Dekodierer 56 einen neuen Kode abgibt, d.h. wenn der Zähler 48 eine vorgegebene Anzahl von Schreibvorgängen gezählt und daher an seinem Überlaufausgang 55 ein entsprechendes Steuersignal abgegeben hat, die Wertigkeiten der Speicherplätze in den Speicher 42 und 50 vorzugsweise zyklisch zu vertauschen, so daß beispielsweise der Speicherplatz mit der bisher niedrigsten Wertigkeit zum Speicherplatz mit der höchsten Wertigkeit wird und alle anderen Speicherplätze auf der Wertigkeitsskala um eine Stufe nach unten wandern oder umgekehrt. In Verbindung mit der Maßnahme, daß nur in diejenigen Speicherplätze hinein ein Schreibvorgang stattfindet, deren Inhalt sich von dem neu einzuschreibenden Wert unterscheidet, führt dies dazu, daß alle Speicherplätze in etwa gleich häufig beschrieben werden.
2. Alternativ oder zusätzlich hierzu kann vorgegesehen sein, daß zumindest der Hilfsspeicher 50 mehr parallel zu beschreibende Speicherplätze aufweist, als der Zähler 48 parallele Ausgänge besitzt. In diesem Fall kann der Kodierer 52 dazu verwendet werden, in Abhängigkeit von dem durch den Kodegenerator 56 erzeugten Kode immer dann, wenn eine bestimmte Anzahl von Schreibvorgängen erfolgt ist, die Auswahl der zum Speichern benutzten Speicherzellen aus der insgesamt zur Verfügung stehenden Anzahl von Speicherzellen zu verändern. So kann z.B. vorgesehen sein, daß dann, wenn zum Speichern der im Zähler 48 enthaltenen Information zehn Speicherzellen benötigt werden, der Speicher 50 zwanzig solche Speicherplätze umfaßt, von denen während einer ersten Serie von Speichervorgängen die Zellen 1 bis 10, während einer weiteren Serie von Speichervorgängen die Zellen 2 bis 11 usw. benutzt werden, bis am Schluß alle vorhandenen zwanzig Speicherplätze benutzt und mit einer in etwa gleich großen Anzahl von Schreibvorgängen belastet worden sind. Zusätzlich hierzu kann auch der erste Speicher 42 eine größere Anzahl von Speicherplätzen aufweisen, als für die Speicherung des Zählerstandes des Zählers 40 benötigt wird. Die Änderung der Auswahl der jeweils benutzten Speicherplätze erfolgt dann in entsprechender Weise mit Hilfe des Kodierers 44.

Wie bereits erwähnt, können die unter 1. und 2. beschriebenen Maßnahmen sowohl jeweils einzeln als auch beide gemeinsam verwendet werden, wobei sich im letzteren Fall eine besonders lange Lebensdauer erzielen läßt.

Sind die in den Zählern 40 und 48 enthaltenen Zählwerte in der durch die Kodierer 44 und 52 veränderten Darstellungsform in die Speicher 42 und 50 eingeschrieben, so ist ein weiterer Abfall der Versorgungsspannung unschädlich, weil die EEPROM-Speicher 42, 50 und 58 ohne weiteres in der Lage sind, auch über lange versorgungsspannungsfreie Zeiträume hinweg die in ihnen gespeicherte Information aufrechtzuerhalten.

Liefert die Induktionsspule 15 einen neuen Strom-Spannungs-Stoß, so daß für die in Fig. 2 gezeigte Schaltung wieder eine ausreichend hohe Versorgungsspannung zur Verfügung steht, so sendet die Steuerlogik 60 zunächst auf der Leitung 67 einen Steuerimpuls an den Preset-Eingang des Kodegenerators 56, der daraufhin den im Speicher 58 gespeicherten Kode übernimmt und an die Kodierer 44 und 52 sowie die Dekodierer 45 und 54 anlegt. Als nächstes sendet die Steuerlogik 60 einen Befehlsimpuls auf der Leitung 65 an die Preset-Eingänge der Zähler 40 und 48, die daraufhin die an ihren Paralleleingängen anliegenden Zählerstände übernehmen, die gleich den vor dem Spannungsausfall vorhandenen Zählerständen sind und auch die richtige Darstellungsform besitzen, da die beim vorausgehenden Schreibvorgang durch die Kodierer 44 und 52 zur Verlängerung der Lebensdauer der Speicher 42 und 50 vorgenommene Darstellungsänderung durch die Dekodierer 45 und 54 wieder rückgängig gemacht wird. Erst wenn dieser Rückübertragungsvorgang abgeschlossen ist, wird der Zählwert des Speichers 48 um "1" erhöht, wodurch der vor dem Spannungsverlust erfolgte Schreibvorgang gezählt wird. Diese "nachträgliche" Zählung ist erforderlich, damit in den Fällen, in denen dieser Zählvorgang zu einem Überlaufen des Speichers 48 und damit zu einer Änderung des vom Kodegenerator 56 abgegebenen Kodes führt, beim Rückspeichern der in den Speichern 42 und 50 gespeicherten Zählerstände in die Zähler 40 und 48 der gleiche Kode wie beim vorausgehenden Schreibvorgang verwendet wird.

Somit ist sichergestellt, daß in die Zähler 40 und 48 die vor dem Spannungsverlust vorhandenen Zählwerte unverändert eingeschrieben werden und diese Zähler von dieser Basis ausgehend ordnungsgemäß weiterzählen können. Durch die Maßnahme, die Ladespannung des Spannungsversorgungskondensators 30 wesentlich größer zu wählen als die kritische Spannung, bei deren Unterschreiten die Steuerlogik 60 einen Schreibvorgang auslöst, wird eine Verzögerungszeit in dem Sinne erzielt, daß nicht bei jedem geringfügigen Absinken der Versorgungsspannung sofort ein Schreibvorgang durchgeführt werden muß. Da bei vielen Anwendungsfällen das Auftreten von Stillstandszeiten, die kürzer sind als diese Verzögerungszeit, wahrscheinlicher ist, als von solchen, die länger sind, verringert sich die Anzahl der erforderlichen Schreibvorgänge erheblich. Damit erhöht sich die Lebensdauer der Speicher 40, 50 und 58 entsprechend.

Statt des in Fig. 3 gezeigten Komparators kann in der Spannungsüberwachungsschaltung 32 ein Zeitglied, beispielsweise ein Oszillator mit nachgeschaltetem Schwingungszähler verwendet werden, wobei dem Rücksetzeingang dieses Zählers über die in Fig. 2 durch eine gestrichelte Linie dargestellte Leitung 99 die von der Meß- und Regelschaltung 24 abgegebenen Impulse zugeführt werden. Da jedem dieser Impulse ein Ladevorgang des Kondensators 30 unmittelbar vorausgeht, kann mit Hilfe der erwähnten Oszillator-Zähler-Anordnung eine Zeitspanne definiert werden, während derer mit Sicherheit angenommen werden kann, daß eine ausreichende Versorgungsspannung zur Verfügung steht und kein Schreibvorgang durchgeführt werden muß. Erst wenn der die Schwingungen des Oszillators abzählende Zähler einen vorbestimmten Zählwert überschreitet, wird über die Leitung 61 ein entsprechendes Befehlssignal an die Steuerlogik 60 gegeben. Allerdings ist der Stromverbrauch einer solchen Oszillator-Zäh1er-Anordnung höher als der des hochohmigen Spannungsteilers 95, 96 und des Komparators 97, und es kann nicht die maximale Zeitspanne ausgenutzt werden.

Eine andere Ausführungsform ist so aufgebaut, daß die in Fig. 1 gezeigten Energieumformer 5, 5' lediglich dazu verwendet werden, um bei niedrigen bzw. großen Drehgeschwindigkeiten der Welle 1 die Versorgung der in Fig. 2 gezeigten Schaltungsanordnung mit elektrischer Energie sicherzustellen, während die Information über die Umdrehungen der Welle mit Hilfe eines zusätzlichen kapazitiven Drehgebers gewonnen wird, der nur sehr wenig elektrische Energie verbraucht.

Dieser Drehgeber ist dann unmittelbar mit der Meß- und Regelschaltung 24 verbunden, die die von ihm gelieferten Signale auswertet und immer dann, wenn von diesem Drehgeber eine vorgewählte Winkelposition durchlaufen wird, auf der Leitung 38 einen Zählimpuls abgibt. Da die Ausgangssignale dieser bekannten Drehgeber auch eine Richtungskennung ermöglichen, kann die Meß- und Regelschaltung 24 aus ihnen auch das auf der Leitung 39 abzugebende Richtungssignal ableiten.

Auch sind Ausführungsbeispiele möglich, bei denen nur die in Fig. 1 gezeigten Energieumformer 5 , bei denen die Hilfsspulen 16, 16' beispielsweise aus Platzgründen weggelassen werden müssen, in Verbindung mit einem der eben erwähnten kapazitiven Drehgeber Verwendung finden. Die von den Energieumformern abgegebenen Strom-Spannungs-Stöße können dann sowohl zum Laden des Kondensators 30 als auch zur Ableitung eines Zählimpulses in der oben beschriebenen Weise verwendet werden, während die Richtungsinformation mit Hilfe der Signale des kapazitiven Drehgebers gewonnen wird, der in all den Fällen, in denen die Drehbewegung der Welle 1 nicht extrem langsam kriechend erfolgt, dadurch, daß er einen absoluten Winkelwert zwischen 0° und 360° liefert, einen Rückschluß darauf erlaubt, ob der von einem der Energieumformer zuletzt gelieferte Impuls dadurch erzeugt wurde, daß sich die Welle 1 und mit ihr der Permanentmagnet 3 im oder entgegen dem Uhrzeigersinn gedreht haben.

Zwar wurde bei den vorausgehenden Erläuterungen zunächst angenommen, daß der Kondensator 30 die einzige Stromversorgungsquelle für die in Fig. 2 gezeigte Schaltungsanordnung 20 darstellt. Dies ist aber nicht unbedingt erforderlich. Es kann durchaus eine externe Spannungs/Strom-Quelle vorhanden sein, die parallel zum Kondensator 30 liegt und die Schaltungseinheiten im Regelfall mit elektrischer Energie versorgt. Alle oben beschriebenen Funktionsabläufe treten in diesem Fall dann ein, wenn diese externe Spannungs/Strom-Quelle abgeschaltet wird oder aus irgendwelchen Gründen versagt. Tritt dieser Ausfall bei stehender Welle 1 auf, so stellt wieder die Spannungsüberwachungsschaltung das gefährliche Absinken der Versorgungsspannung fest und veranlaßt die Steuerlogik 60 in der oben beschriebenen Weise einen Schreibvorgang durchzuführen. Dreht sich dann die Welle 1, während die externe Spannungsversorgung ausgefallen ist, so wird bei jedem Vorbeilaufen eines der Stirnenden des Permanentmagneten 3 an einem der Energieumformer 5 bzw. 5' in der beschriebenen Weise ein Schwingungssignal erzeugt, das nicht nur einen Zählimpuls sondern auch genügend elektrische Energie liefert, um diesen Zählimpuls zu zählen und, wenn die Spannung weiter absinkt, im nicht flüchtigen Speicher 42 zu speichern.

Treten dagegen die durch eine Drehung der Welle 1 bewirkten Schwingungssignale mit genügend großer Häufigkeit auf, weil sich die Welle ausreichend schnell dreht, so wird die Energieversorgung unterbrechungsfrei vom Kondensator 30 sichergestellt und der Hauptzähler 40 kann die Umdrehungen zählen ohne daß jedesmal ein Schreibvorgang durchgeführt werden muß.

Diese beiden Betriebsarten können so lange fortgesetzt werden, bis die Hauptstromversorgung wieder arbeitet und auch bei sich sehr langsam drehender Welle eine ununterbrochene Stromversorgung der Schaltungsanordnung sichergestellt ist.

Es wurde bereits erwähnt, daß es vorteilhaft ist, alternativ oder zusätzlich zu den eben ausführlich beschriebenen Maßnahmen den Zählerstand des jeweiligen Zählers den Paralleleingängen des zugehörigen Speichers in einer derart kodierten Form zuzuführen, daß ein Wechsel zwischen logisch "1" und logisch "0" bzw. umgekehrt für möglichst viele Speicherplätze mit einer besseren zeitlichen Gleichverteilung und damit für die ansonsten am stärksten belasteten Speicherzellen erheblich seltener auftritt, als dies beim reinen Binärkode der Fall ist.

Dies wird im Folgenden anhand eines 2-Bit-Binärzählers erläutert. Zählt dieser ausgehend vom Zählerstand Null vier Impulse, so ergeben sich nach dem regulären Binärkode an seinen Ausgängen A₁ und A₂ folgende Logikzustände:

| Gez. Impuls | Ausg. A₁ | Ausg. A₂ |
|---|---|---|
| 0 | 0 | 0 |
| 1 | 1 | 0 |
| 2 | 0 | 1 |
| 3 | 1 | 1 |
| 4 | 0 | 0 |

Am Ausgang A₁ findet also ein Wechsel des Logikwertes viermal und am Ausgang A₂ nur zweimal statt. In Verbindung mit der Maßnahme, einen Schreibvorgang nur an den Speicherzellen wirksam werden zu lassen, für die der neu einzuschreibende Logikwert von dem bereits gespeicherten Wert verschieden ist, führt dies zu einer doppel so hohen Belastung der dem Ausgang A₁ zugeordneten Speicherzelle.

Kodiert man jedoch die dem Speicher zugeführten Logikzustände in folgender Weise

| Gez. Impuls | Ausg. A₁' | Ausg. A₂' |
|---|---|---|
| 0 | 0 | 0 |
| 1 | 1 | 0 |
| 2 | 1 | 1 |
| 3 | 0 | 1 |
| 4 | 0 | 0 |

so tritt ein Wertewechsel für jede Speicherzelle gleich häufig auf und die dem Ausgang A₁' zugeordnete Zelle wird nur halb so stark belastet, was zu einer Verdoppelung der Lebensdauer führt.

Entsprechendes läßt sich auch für Zähler mit einer größeren Zählkapazität zeigen.

## Patentansprüche

1. Stellungsgeber, der folgende Bestandteile umfaßt:
- eine Sensoranordnung mit wenigstens einem Sensor, der in Abhängigkeit von der Bewegung, die einer von zwei Körpern, deren gegenseitige Stellung überwacht werden soll, bezüglich des anderen ausführt, elektrische Ausgangssignale liefert,
- eine elektronische Schaltungsanordnung, welche die Sensorsignale zur Erzeugung eines digitalen Signales vorverarbeitet, das in codierter Form die zu überwachende Stellung beschreibende Information enthält, und dieses digitale Signal zwischenspeichert, bis es zur weiteren Verarbeitung an eine Auswerteeinheit übertragen werden kann,
dadurch gekennzeichnet, daß weiterhin folgende Bestandteile vorhanden sind:
- ein Energieumformer (5,5'), der einen Teil der kinetischen Energie der zu überwachenden Bewegung abzweigt und bei Erreichen einer vorgebbaren Position jeweils in einen elektrischen Strom/Spannungs-Stoß umformt, der auch dann ausreichend elektrische Energie enthält, um zumindest eine zeitweilige Stromversorgung für die elektronische Schaltungsanordnung (20) sicherzustellen, wenn besagte Bewegung äußerst langsam erfolgt,
- ein Energiespeicher (29) der die vom Energieumformer (5,5') abgegebene elektrische Energie speichert und für die Strom/Spannungsversorgung der elektronischen Schaltungsanordnung (20) zur Verfügung stellt,
- eine Überwachungsschaltung (32), die eine Annäherung der vom Energiespeicher (29) gelieferten Versorgungsspannung an einen kritischen Spannungswert erkennt, bei dessen Unterschreiten die Schaltungsanordnung (20) die im zwischengespeicherten digitalen Signal enthaltene Information verliert, und vor dem Unterschreiten dieses Spannungsgrenzwertes ein Steuersignal abgibt, sowie
- ein nicht flüchtiger Informationsspeicher (42) in den das digitale Signal immer dann eingelesen wird, wenn die Überwachungsschaltung (32) das Steuersignal erzeugt.

2. Stellungsgeber nach Anspruch 1, dadurch **gekennzeichnet**, daß der Energieumformer (5, 5') wenigstens eine Induktionsspule (15, 15') umfaßt, in der ein Strom-Spannungs-Stoß induziert wird, wenn der eine der beiden Körper bezüglich des anderen eine vorbestimmte Position durchläuft, und daß der Energiespeicher (29) wenigstens einen Kondensator (30) umfaßt, der durch den Strom-Spannungs-Stoß auf eine Spannung aufgeladen wird, die der Elektronikschaltung (20) als Versorgungsspannung dient.

3. Stellungsgeber nach Anspruch 2, dadurch **gekennzeichnet**, daß eine weitere Kondensatoranordnung (35) vorgesehen ist, die durch die Strom-Spannungs-Stöße auf eine Spannung aufgeladen wird, die nicht als reguläre Versorgungsspannung für die Elektronikschaltung (20) dient.

4. Stellungsgeber nach Anspruch 2 oder 3, dadurch **gekennzeichnet**, daß die Überwachungsschaltung (32) ein Zeitglied enthält, das jeweils beim Auftreten eines in der Induktionsspule (15, 15') induzierten Strom-Spannungs-Stoßes eine Zeitmessung beginnt, und daß ein Steuersignal zum Einschreiben des digitalen Signals in den nicht flüchtigen Informationsspeicher (42) immer dann erzeugt wird, wenn die gemessene Zeit einen vorgebbaren Zeitgrenzwert überschreitet.

5. Stellungsgeber nach Anspruch 3, dadurch **gekennzeichnet**, daß die Überwachungsschaltung (32) einen Spannungskomparator (97) umfaßt, der die vom Energiespeicher (29) zur Verfügung gestellte, sich ändernde Versorgungsspannung mit der von der weiteren Kondensatoranordnung (35) zur Verfügung gestellten, während des regulären Betriebs im wesentlichen unverändert bleibenden Spannung vergleicht, um eine Annäherung der Versorgungsspannung an den kritischen Spannungsgrenzwert zu erkennen.

6. Stellungsgeber nach einem der Ansprüche 3 bis 5, dadurch **gekennzeichnet**, daß die in der weiteren Kondensatoranordnung (35) gespeicherte elektrische Energie zum Einschreiben der digitalen Information in den nicht flüchtigen Informationsspeicher (42) genutzt wird.

7. Stellungsgeber nach Anspruch 6, dadurch **gekennzeichnet**, daß die weitere Kondensatoranordnung (35) mehrere Kondensatoren (74, 75, 76, 77) umfaßt, die mit Hilfe von steuerbaren Schaltern (80, 81, 86, 87, 88, 90, 92) für die Ladevorgänge durch in der Induktionsspule (15, 15') induzierten Strom-Spannungs-Stöße zueinander parallel und für die Schreibvorgänge zur Erzeugung einer erhöhten Schreibspannung miteinander in Reihe schaltbar sind.

8. Stellungsgeber nach einem der vorhergehenden Ansprüche, dadurch **gekennzeichnet**, daß die elektronische Schaltungsanordnung (20) einen Zähler (40) umfaßt, dessen Zählerstand das digitale Signal darstellt, das die Information enthält, die in kodierter Form die zu überwachende Stellung beschreibt, daß der Zähler Parallelausgänge besitzt, an denen sein Zählerstand in binär kodierter Form anliegt, und daß der nicht flüchtige Informationsspeicher (42) Paralleleingänge besitzt, die mit den Parallelausgängen des Zählers (40) verbunden sind, um beim Auftreten des Steuersignals der Überwachungsschaltung (32) den momentanen Zählerstand des Zählers (40) einlesen zu können.

9. Stellungsgeber nach Anspruch 8, dadurch **gekennzeichnet**, daß der nicht flüchtige Informationsspeicher (42) nur eine begrenzte Anzahl von Schreibvorgängen ermöglicht und daß bei jedem Schreibvorgang nur diejenigen seiner Speicherplätze beschrieben werden, die einen logischen Wert beinhalten, der von dem logischen Wert verschieden ist, der sich für den betreffenden Speicherplatz aus dem einzuschreibenden Zählerstand ergibt.

10. Stellungsgeber nach Anspruch 9, dadurch **gekennzeichnet**, daß eine Vertauschungsschaltung vorgesehen ist, die nach einer vorgebbaren Anzahl von Schreibvorgängen die Wertigkeiten von Speicherplätzen so vertauscht, daß bisher häufig beschriebene Speicherplätze im statistischen Mittel weniger häufig und bisher weniger häufig beschriebene Speicherplätze im statistischen Mittel häufiger beschrieben werden, und daß eine Rückkoppelschaltung vorgesehen ist, die beim Wiederanliegen der erforderlichen Versorgungsspannung eine Rückübertragung des im Informationsspeicher (42) gespeicherten Zählerstandes in den Zähler (40) in der Weise ermöglicht, daß dabei die Wertigkeitsvertauschung rückgängig gemacht wird.

11. Stellungsgeber nach Anspruch 10, dadurch **gekennzeichnet**, daß die Wertigkeitsvertauschung der Speicherplätze zyklisch in der Weise erfolgt, daß jeweils der Speicherplatz mit der höchsten Wertigkeit zum Speicherplatz mit der niedrigsten Wertigkeit wird, während alle anderen Speicherplätze um eine Wertigkeitsstufe nach oben rücken.

12. Stellungsgeber nach Anspruch 10, dadurch **gekennzeichnet**, daß die Wertigkeitsvertauschung der Speicherplätze zyklisch in der Weise erfolgt, daß jeweils der Speicherplatz mit der niedrigsten Wertigkeit zum Speicherplatz mit der höchsten Wertigkeit wird, während alle anderen Speicherplätze um eine Wertigkeitsstufe nach unten rücken.

13. Stellungsgeber nach einem der Ansprüche 10 bis 12, dadurch **gekennzeichnet**, daß das Erreichen der vorgegebenen Anzahl von Schreibvorgängen mit Hilfe eines Hilfszählers (48) ermittelt wird, der sich bei Überlauf selbst zurücksetzt und dessen Zählerstand in gleicher Weise über eine Hilfsvertauschungsschaltung in einen nur eine begrenzte Anzahl von Schreibvorgängen ermöglichenden nichtflüchtigen Informationshilfsspeicher (50) eingeschrieben wird, wie beim Hauptzähler (40), wobei dem Informationshilfsspeicher (50) in gleicher Weise eine Hilfsrückkoppelschaltung nachgeordnet ist und bei jedem Schreibvorgang auch im Informationshilfsspeicher (50) nur solche Speicherzellen beschrieben werden, die einen logischen Wert beinhalten, der von dem logischen Wert verschieden ist, der sich für den betreffenden Speicherplatz aus dem einzuschreibenden Hilfszählerstand ergibt.

14. Stellungsgeber nach Anspruch 13, dadurch **gekennzeichnet**, daß sowohl die Vertauschungsschaltung als auch die Hilfsvertauschungsschaltung jeweils von einem Kodierer (44 bzw. 52) gebildet wird, der zwischen den parallelen Ausgängen des Zählers (40) bzw. des Hilfszählers (48) und den parallelen Eingängen des Informationsspeichers (42) bzw. des Informationshilfsspeichers (50) angeordnet ist, daß sowohl die Rückkoppelschaltung als auch die Hilfsrückkoppelschaltung jeweils von einem Dekodierer (45 bzw. 54) gebildet wird, der zwischen den parallelen Ausgängen des Informationsspeichers (42) bzw. des Informationshilfsspeichers (50) und den parallelen Eingängen des Zählers (40) bzw. des Hilfszählers (48) angeordnet ist, daß die Kodierer (44, 52) und die Dekodierer (45, 54) von einem Kodegenerator (56) angesteuert werden, der den Kode jedesmal ändert, wenn die vorgegebene Anzahl von Schreibvorgängen erreicht worden ist, und daß ein nur eine begrenzte Anzahl von Schreibvorgängen ermöglichender zweiter nichtflüchtiger Informationshilfsspeicher (58) vorgesehen ist, in dem der vom Kodegenerator (56) erzeugte Kode gespeichert wird, wenn die Überwachungsschaltung (32) ein drohendes Absinken der Versorgungsspannung unter den vorgewählten Spannungsgrenzwert festgestellt hat.

15. Stellungsgeber nach einem der Ansprüche 8 bis 14, dadurch **gekennzeichnet**, daß zumindest der Informationshilfsspeicher (50) mehr Speicherzellen umfaßt als der Hilfszähler (48) parallele Ausgänge besitzt und daß eine Auswahlschaltung vorgesehen ist, die nach einer vorgebbaren Anzahl von Schreibvorgängen die Auswahl der für die Speicherung benutzten Speicherplätze aus der Gesamtzahl der zur Verfügung stehenden Speicherplätze ändert, und daß eine Auswahlumkehrschaltung vorgesehen ist, die beim Wiederanliegen der erforderlichen Versorgungsspannung eine Rückübertragung des im Hilfsspeicher (50) gespeicherten Zählerstandes in den Hilfszähler (48) in der Weise ermöglicht, daß dabei die jeweils ausgewählten Speicherplätze mit den parallelen Eingängen des Hilfszählers (48) verbunden sind.

16. Stellungsgeber nach Anspruch 15, dadurch **gekennzeichnet**, daß der die Vertauschungsschaltung bildende Kodierer (52) auch als Auswahlschaltung und der die Rückkoppelschaltung bildende Dekodierer (54) auch als Auswahlumkehrschaltung dienen.

17. Stellungsgeber nach einem der Ansprüche 8 bis 16, dadurch **gekennzeichnet**, daß der Hauptzähler (40) Impulse zählt, von denen jeder von jeweils einem in einer Induktionsspule (15,15') des Energieumformers (5,5') erzeugten Strom-Spannungs-Stoß abgeleitet ist.

18. Stellungsgeber nach Anspruch 17, dadurch **gekennzeichnet**, daß zumindest einem der Speicher (42, 50, 58) die Zählerstände des zugehörigen Zählers (40, 48, 56) derart kodiert zugeführt werden, daß die Häufigkeit, mit der die einzelnen Zellen ihren logischen Wert ändern, gleichmäßiger als beim reinen Binärkode verteilt ist.

## Claims

1. A position detector comprising the following components:
- a sensor arrangement having at least one sensor which, in dependence on the movement performed by one of two bodies whose mutual position is to be monitored with respect to the other, supplies electrical output signals,
- an electronic circuit arrangement for preprocessing the sensor signals to generate a digital signal containing in encoded form the information describing the position to be monitored, and for putting said digital signal into intermediate storage until it can be transmitted for further processing to an evaluation unit,
characterized in that the following further components are provided:
- an energy conversion means ( 5, 5') which branches off a part of the kinetic energy of the movement to be monitored and transforms said energy into an electrical current-voltage surge when a predetermined position is reached, said surge containing sufficient electrical energy to ensure an at least temporary power supply for the electronic circuit arrangement (20) even when said movement is extremely slow,
- an energy storage means (29) for storing the electrical energy outputted by the energy conversion means (5, 5') and making it available for the current-voltage supply for the electronic circuit arrangement (20),
- a monitoring circuit (32) for detecting the approach of the supply voltage delivered by the energy storage means (29) to a critical voltage limit value, the circuit arrangement (20) losing information contained in the digital signal in intermediate storage when its supply voltage falls below said critical voltage limit value, and outputting a control signal before said supply voltage falls below said voltage limit value, and
- a non-volatile information storage means (42) into which the digital signal is read whenever the monitoring circuit (32) produces the control signal.

2. A position detector according to claim 1 characterized in that the energy conversion means (5, 5') includes at least one induction coil (15, 15') in which a current-voltage surge is induced when one of said two bodies relative to the other passes through a predetermined position, and in that the energy storage means (29) includes at least one capacitor (30) which is charged up by said current-voltage surge to a voltage which serves as a supply voltage for the circuit arrangement 20).

3. A position detector according to claim 2, characterized in that a further capacitor arrangement (35) is provided which is charged up by said voltage-current surges to a voltage which does not serve as a regular supply voltage for the circuit arrangement (20).

4. A position detector acording to claims 2 or 3, characterized in that the monitoring circuit (32) includes a timing member which begins a time measurement operation whenever a current-voltage surge which is induced in the induction coil (15, 15') occurs, and in that a control signal for writing of the digital signal into the non-volatile information storage means (42) is generated whenever the measured time exceeds a predeterminable time limit value.

5. A position detector according to claim 3, characterized in that said monitoring circuit (32) includes a voltage comparator (97) adapted to compare the varying supply voltage provided by the energy storage means (29) to the voltage which is provided by the further capacitor arrangement (35) and which remains substantially unchanged during regular operation, in order to detect the approach of said supply voltage to said critical voltage limit value.

6. A position detector according to any of claims 3 to 5, characterized in that the electrical energy stored in the further capacitor arrangement (35) is used for writing the digital information into the non-volatile information storage means (42).

7. A position detector according to claim 6, characterized in that said further capacitor arrangement (35) comprises a plurality of capacitors (74, 75, 76, 77) which by a plurality of controllable switches (80, 81, 86, 87, 88, 89, 90, 92) are connectable in parallel with each other for the charging operations by the current-voltage surges induced in the induction coil (15, 15') and are connectable in series with each other for the writing operations for producing an increased writing voltage.

8. A position detector according to any preceding claim, characterized in that the electronic circuit arrangement (20) includes a counter (40) whose counted value represents the digital signal containing the information describing in encoded form the position to be monitored, in that the counter (40) has parallel outputs at which its counted value occurs in a binary coded form, and in that the non-volatile information storage means (42) has parallel inputs connected to the parallel outputs of the counter (40) whereby the instantaneous counted value of the counter (40) can be read into the storage means when the control signal from monitoring circuit (32) occurs.

9. A position detector according to claim 8, characterized in that the non-volatile information storage means (42) permits only a limited number of writing operations and in that in each writing operation only those ones of ist storage positions are written to which contain a logic value that is different from the logic value which results for the respective storage position from the counted value which is to be written in.

10. A position detector according to claim 9, characterized in that an interchange circuit is provided which, after a predeterminable number of writing operations, interchanges the significances of storage positions in such a way that hitherto frequently writen-to storage positions are written-to less frequently on a statistical mean and hitherto less frequently written-to storage positions are written-to more frequently on a statistical mean and in that a first feedback circuit means is provided which, when the required supply voltage is restored, allows a transmission of the counted value stored in the information storage means (42) back to the counter (40) by a procedure whereby said interchange of significances is reversed.

11. A position detector according to claim 10, characterized in that said interchange of significances of the storage positions is performed cyclically in such a way that in each case the respective storage position with the highest significance becomes the storage position with the lowest significance while all other storage positions move upwardly by one step of significance.

12. A position detector according to claim 10, characterized in that said interchange of significances of the storage positions is performed cyclically in such a way that in each case the respective storage position with the lowest significance becomes the storage position with the highest significance while all other storage positions move downwardly by one step of significance.

13. A position detector according to any of claims 10 to 12, characterized in that the attainment of said predetermined number of writing operations is detected by an auxiliary counter (48) which resets itself upon overflow and the counted value of which, by means of an auxiliary interchange circuit (52), can be written into a non-volatile auxiliary information storage means (50) also permitting only a limited number of writing operations in the same manner as with the main counter (40), an auxiliary feedback circuit means being arranged downstream of the auxiliary information storage means (50) in the same manner, the arrangement being such that each writing operation involves writing in the auxiliary information storage means (50) rent from the logic value which arises for the respective storage position out of the auxiliary countered value which is to be written in.

14. A position detector according to claim 13, characterized in that both said interchange circuit and said auxiliary interchange circuit are each formed by a respective encoder (44 and 52) disposed between the parallel outputs of the first counter (40) and the auxiliary counter (48) respectively and the parallel inputs of the information storage means (42) and the auxiliary information storage means (50) respectively, in that both the feedback circuit means and the auxiliary feedback circuit means are each formed by a respective decoder (45 and 54) disposed between the parallel outputs of the information storage means (42) and the auxiliary information storage means (50) respectively and the parallel inputs of the counter (40) and the auxiliary counter (48) respectively, in that the encoders (44, 52) and the decoders (45, 54) are controlled by a code generator (56) altering the code whenever the predetermined number of writing operations has been reached, and in that a second non-volatile auxiliary information storage means (58) which permits only a limited number of writing operations is provided in which the code generated by the code generator (56) is stored when the monitoring circuit (32) has detected a threat of the supply voltage falling below the preselected voltage limit value.

15. A position detector according to claim 14, characterized in that at least the auxiliary information storage means (50) includes more storage cells than the auxiliary counter means (48) has parallel outputs, in that a selection circuit is provided which, after a predeterminable number of writing operations changes the selection of the storage positions used for the storage out of the overall number of available storage positions, and in that a selection reversal circuit is provided which, when the required supply voltage is restored, allows a transfer of the counted value stored in the auxiliary storage means (50) back into the auxiliary counter (48) in such a way that the respectively selected storage positions are connected to the parallel inputs of the auxiliary counter (48).

16. A position detector according to claim 15, characterized in that the encoder (52) serves also as the selection circuit and the decoder (54) serves also as the selection reversal circuit.

17. A position detector according to any of claims 8 to 16, characterized in that the main counter (40) counts pulses, each of which is derived from a respective current-voltage surge produced in an induction coil (15, 15') of the energy conversion means (5,5').

18. A position detector according to claim 17, characterized in that at least to one of the storage means (42, 50, 58) the counted values of the associated counter (40, 48, 56) are fed in encoded form in such a way that the frequency with which individual storage cells change their logic value is more uniformly distributed than in the case of a pure binary code.

## Revendications

1. Transducteur de position comprenant les éléments constitutifs suivants :
un arrangement de capteurs comportant au moins un capteur, qui délivre des signaux de sortie électriques en fonction du déplacement qu'un parmi deux corps effectue par rapport à l'autre, la position relative dudit corps devant être surveillée,
un arrangement de circuit électronique qui convertit préalablement les signaux de capteur pour obtenir un signal numérique, qui contient sous forme codée l'information décrivant la position à surveiller, et ce signal numérique est temporairement stocké jusqu'à ce qu'il puisse être transmis pour un traitement ultérieur à une unité d'exploitation,
caractérisé en ce qu'il comporte en outre les éléments constitutifs suivants :
un convertisseur d'énergie (5, 5') qui sépare une partie de l'énergie cinétique du déplacement à surveiller et lorsqu'une position prédéterminable est atteinte, et la convertit respectivement en une impulsion électrique de courant/tension, qui contient alors également une énergie électrique suffisante pour assurer au moins une alimentation de courant temporaire pour l'arrangement de circuit électronique (20), lorsque le déplacement susmentionné se produit particulièrement lentement,
un accumulateur d'énergie (29) qui stocke l'énergie électrique délivrée par le convertisseur d'énergie (5, 5') et la délivre pour l'alimentation de courant/tension de l'arrangement de circuit électronique (20),
un circuit de surveillance (32) qui reconnait que la tension d'alimentation délivrée par l'accumulateur d'énergie (29) se rapproche d'une valeur de tension critique, l'arrangement de circuit (20) perdant l'information contenue dans le signal numérique temporairement stockée lorsque la tension limite, et délivrant un signal de commande avant de passer sous cette valeur limite de tension, et
une mémoire d'information non volatile (42) dans laquelle le signal numérique est toujours mémorisée lorsque le circuit de surveillance (32) produit le signal de commande.

2. Transducteur de position selon la revendication 1, caractérisé en ce que le convertisseur d'énergie (5, 5') comprend au moins une bobine d'induction (15, 15'), dans laquelle une impulsion de courant-tension est induite, lorsque l'un des deux corps passe à travers une position prédéterminée par rapport à l'autre, et en ce que l'accumulateur d'énergie (29) comprend au moins un condensateur (30) qui est chargé par l'impulsion de courant-tension à une tension qui sert de tension d'alimentation pour le circuit électrique (20).

3. Transducteur de position selon la revendication 2, caractérisé en ce qu'il est prévu un autre arrangement de condensateur (35), qui est chargé par l'impulsion de courant-tension à une tension qui ne sert pas de tension d'alimentation régulière pour le circuit électronique (20).

4. Transducteur de position selon la revendication 2 ou 3, caractérisé en ce que le circuit de surveillance (32) contient un système temporisateur, qui à chaque apparition d'une impulsion de courant-tension induite dans la bobine d'induction (15, 15'), initie une mesure de temps, et en ce qu'un signal de commande est alors produit pour écrire le signal numérique dans la mémoire d'information non volatile (42), lorsque le temps mesuré dépasse une valeur limite de temps prédéterminable.

5. Transducteur de position selon la revendication 3, caractérisé en ce que le circuit de surveillance (32) comprend un comparateur de tension (97) qui compare la tension d'alimentation variable mise à la disposition par l'accumulateur d'énergie (29) avec la tension restée sensiblement constante pendant le fonctionnement régulier mise à la disposition par l'autre arrangement de condensateur (35), pour reconnaître un rapprochement de la tension d'alimentation vers la valeur limite de tension critique.

6. Transducteur de position selon l'une des revendications 3 à 5, caractérisé en ce que l'énergie électrique stockée dans l'autre arrangement de condensateur (35) est utilisée pour écrire l'information numérique dans la mémoire d'information non volatile (42).

7. Transducteur de position selon la revendication 6, caractérisé en ce que l'autre arrangement de condensateur (35) comprend plusieurs condensateurs (74, 75, 76, 77), qui sont commutables à l'aide de commutateurs commandables (80, 81, 86, 87, 88, 90, 92) en parallèle pour les processus de chargement par impulsions de courant-tension induites dans la bobine d'induction (15, 15') et en série pour les processus d'écriture pour l'obtention d'une tension d'écriture supérieure.

8. Transducteur de position selon l'une des revendications précédentes, caractérisé en ce que l'arrangement de circuit électronique (20) comprend un compteur (40), dont la position de comptage représente le signal numérique, qui contient l'information qui décrit sous forme codée la position à surveiller, en ce que le compteur comprend des sorties en parallèle, auxquelles sa position de comptage est donnée sous forme codée binaire, et en ce que la mémoire d'information non volatile (42) comprend des entrées en parallèle, qui sont reliées avec les sorties en parallèle du compteur (40), afin de pouvoir mémoriser lors de l'apparition du signal de commande du circuit de surveillance (32), la position de comptage momentanée du compteur (40).

9. Transducteur de position selon la revendication 8, caractérisé en ce que la mémoire d'information non volatile (42) ne permet qu'un nombre limité de processus d'écriture et en ce qu'à chaque processus d'ecriture uniquement celles de ses adresses de mémoire sont écrites qui contiennent une valeur logique qui est distincte de la valeur logique qui est obtenue pour l'adresse de mémoire concernée à partir de la position de comptage à écrire.

10. Transducteur de position selon la revendication 9, caractérisé en ce qu'il est prévu un circuit de permutation, qui permute après une nombre prédéterminable de processus d'écriture les valeurs significatives d'adresses de mémoire de telle sorte que des adresses de mémoire jusqu'à présent souvent écrites deviennent écrites en moyenne statistique moins souvent, et que des adresses de mémoire jusqu'à présent moins souvent écrites deviennent écrites en moyenne statistique plus souvent, et en ce qu'il est prévu un circuit de réinjection, qui permet, lors de la réapplication de la tension d'alimentation nécessaire, une retransmission de la position de comptage stocké dans la mémoire d'information (42) dans le compteur (40), de telle manière que la permutation de valeur significative est refaite dans l'autre sens.

11. Transducteur de position selon la revendication 10, caractérisé en ce que la permutation de valeurs significatives des adresses de mémoire se produit cycliquement de telle manière que respectivement l'adresse de mémoire avec la valeur significative la plus haute devient l'adresse de mémoire avec la valeur significative la plus faible, alors que toutes les autres adresses de mémoire sont déplacées vers le haut d'un degré de valeur significative.

12. Transducteur de position selon la revendication 10, caractérisé en ce que la permutation de valeurs significatives des adresses de mémoire se produit cycliquement de telle manière que respectivement l'adresse de mémoire avec la valeur significative la plus faible devient l'adresse de mémoire avec la valeur significative la plus haute, alors que toutes les autres adresses de mémoire sont déplacées vers le bas d'un degré de valeur significative.

13. Transducteur de position selon l'une des revendications 10 à 12, caractérisé en ce que le fait d'atteindre le nombre prédéterminé de processus d'écriture est déterminé à l'aide d'un compteur auxiliaire (48) qui se remet à zéro automatiquement lors d'un dépassement de ce nombre et dont la position de comptage est écrite de la même manière par l'intermédiaire d'un circuit de permutation auxiliaire dans une mémoire auxiliaire d'information non volatile (50) ne permettant qu'un nombre limité de processus d'écriture, comme dans le compteur principal (40), où un circuit de réinjection auxiliaire est disposé de la même manière après la mémoire auxiliaire d'information (50) et lors de chaque processus d'écriture uniquement celles de cellules de mémoire sont écrites dans la mémoire auxiliaire d'information (50) qui contiennent une valeur logique, qui est distincte de la valeur logique qui est obtenue pour l'adresse de mémoire concernée à partir de la position de comptage du compteur auxiliaire à écrire.

14. Transducteur de position selon la revendication 13, caractérisé en ce qu'aussi bien le circuit de permutation que le circuit de permutation auxiliaire sont respectivement formés à partir d'un codeur (44) respectivement (52), qui est disposé entre les sorties en parallèle au compteur (40) respectivement du compteur auxiliaire (48) et les entrées en parallèle de la mémoire d'information (42) respectivement de la mémoire auxiliaire d'information (50), en ce qu'aussi bien le circuit de réinjection que le circuit de réinjection auxiliaire sont respectivement formés avec un décodeur (45) respectivement (54), qui est disposé entre les entrées en parallèle de la mémoire d'information (42) respectivement de la mémoire auxiliaire d'information (50) et les sorties parallèles du compteur (40) respectivement du compteur auxiliaire (48), en ce que les codeurs (44, 52) et les décodeurs (45, 54) sont commandés par un générateur de code (56), qui modifie à chaque fois le code, lorsque le nombre prédéterminé de processus d'écriture a été atteint, et en ce qu'il est prévu une seconde mémoire auxiliaire d'information non volatile (58) ne permettant qu'un nombre limité de processus d'écriture dans laquelle le code généré par le générateur de code (56) est stocké, lorsque le circuit de surveillance (32) a détecté une chute dangereuse de la tension d'alimentation en-dessous de la valeur limite de tension préétablie.

15. Transducteur de position selon l'une des revendications 8 à 14, caractérisé en ce qu'au moins la mémoire auxiliaire d'information (50) comprend plus de cellules de mémoire que le compteur auxiliaire (48) ne présente de sorties en parallèle et en ce qu'un circuit de sélection est prévu qui après un nombre prédéterminable de processus d'écriture modifie la sélection des adresses de mémoire utilisées pour la mise en mémoire à partir du nombre total d'adresses de mémoire à disposition, et en ce qu'il est prévu un circuit inverseur de sélection qui, lors de la réapplication de la tension d'alimentation nécessaire, permet une retransmission de la position de comptage stockée dans la mémoire auxiliaire (50) dans le compteur auxiliaire (48) de telle manière que les adresses de mémoire respectivement sélectionnées sont ainsi reliées avec les entrées en parallèle du compteur auxiliaire (48).

16. Transducteur de position selon la revendication 15, caractérisé en ce que le codeur (52) formant le circuit de permutation sert également de circuit de sélection et le décodeur (54) formant le circuit de réinjection sert également de circuit inverseur de sélection.

17. Transducteur de position selon l'une des revendications 8 à 16, caractérisé en ce que le compteur principal (40) compte des impulsions, dont chacune est obtenue à partir d'une impulsion de courant-tension respective générée dans une bobine (15, 15') du convertisseur d'énergie (5, 5').

18. Transducteur de position selon la revendication 17, caractérisé en ce qu'au moins une des mémoires (42, 50, 58) reçoit la position de comptage du compteur correspondant (40, 48, 56) sous une forme codée de telle sorte que la fréquence avec laquelle les cellules individuelles changent leurs valeurs logiques est répartie de manière plus régulière qu'avec un code binaire pur.
